# EUROPÄISCHE PATENTSCHRIFT

(11) **EP 1 840 013 B1**
(45) Veröffentlichungstag und Bekanntmachung des Hinweises auf die Patenterteilung: **14.07.2010**
(21) Anmeldenummer: 07003703.1
(22) Anmeldetag: 23.02.2007
(51) Int. Cl.: B62D 35/00, B62D 37/02

(54) **Luftleitvorrichtung für ein Fahrzeug**
Air guide device for a vehicle
Dispositif de commande d'air pour véhicule

(30) Priorität: 28.03.2006 DE 102006014258
(43) Veröffentlichungstag der Anmeldung: 03.10.2007
(73) Patentinhaber: Dr. Ing. h.c. F. Porsche AG, 70435 Stuttgart (DE)
(72) Erfinder: Vlahovic, Josip, Dr., 71691 Freiberg am Neckar (DE)

(56) Entgegenhaltungen:
- EP-A- 1 738 996
- DE-A1-102004 030 571

## Beschreibung

Die Erfindung betrifft eine Luftleitvorrichtung für ein Fahrzeug nach dem Oberbegriff des Patentanspruchs 1.

Aus der DE 30 19 150 A1 ist eine Luftleitvorrichtung für ein Fahrzeug bekannt, die in einem oben liegenden Heckbereich des Fahrzeugs angeordnet ist und ein Luftleitelement umfasst, welches von einer Ruhestellung, in der es oberflächenbündig in den Formverlauf des Heckbereichs integriert ist, in eine ausgefahrene Betriebsstellung verlagerbar ist. Das Luftleitelement ist als Tragflügel ausgebildet, der mittels einer Betätigungseinrichtung von der Ruhestellung in die Betriebsstellung und umgekehrt verlagerbar bzw. überführbar ist.

Die DE 43 05 090 A1 offenbart ebenfalls eine Luftleitvorrichtung für ein Fahrzeug, die in einem Heckbereich des Fahrzeugs angeordnet ist und ein Luftleitelement umfasst, welches von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von der Ruhestellung in die Betriebsstellung und umgekehrt verlagerbar ist.

Mit den aus der DE 30 19 150 A1 und aus der DE 43 05 090 A1 bekannten Luftleitvorrichtungen kann der Hinterachsabtriebsbeiwert (cₐₕ-Wert) des Kraftfahrzeugs bei gleichbleibendem oder auch verbessertem Luftwiederstandsbeiwert (c_{w}-Wert) erhöht werden, wobei diese bekannten Luftleitelemente in der Ruhestellung und in der Betriebsstellung jeweils dieselbe Quererstreckung aufweisen.

Die gattungsgemäße DE 10 2004 030 571 A1 offenbart eine Luftleitvorrichtung für ein Fahrzeug, die ein mittleres Luftleitelement sowie zwei seitliche Luftleitelemente umfasst, wobei mit Hilfe der seitlichen Luftleitelemente die Quererstreckung der Luftleitvorrichtung in der Betriebsstellung vergrößert werden kann. Die seitlichen Luftleitelemente sind gegenüber dem mittleren Luftleitelement teleskopartig verfahrbar, wobei die seitlichen Luftleitelemente in der eingefahrenen Ruhestellung Endbereiche des mittleren Leitelements unter Ausbildung optisch und aerodynamisch negativer stufenartiger Absätze kappenartig umhüllen.

Hiervon ausgehend liegt der vorliegenden Erfindung das Problem zu Grunde eine neuartige Luftleitvorrichtung für ein Fahrzeug zu schaffen. Dieses Problem wird dadurch gelöst, dass die eingangs genannte Luftleitvorrichtung durch die Merkmale des kennzeichnenden Teils des Patentanspruchs 1 weitergebildet ist.

Erfindungsgemäß sind in der Ruhestellung der seitlichen Luftleitelemente dieselben derart über das mittlere Luftleitelement geschoben, dass dieselben mit Endabschnitten aneinander liegen und das mittlere Luftleitelement vollständig abdecken oder umhüllen.

Vorzugsweise sind die seitlichen Luftleitelemente zeitgleich bzw. simultan mit der Verlagerung des mittleren Luftleitelements von der Ruhestellung in die Betriebsstellung gegenüber dem mittleren Luftleitelement von einer ebenfalls eingefahrenen Ruhestellung in eine ebenfalls ausgefahrene Betriebsstellung überführbar.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

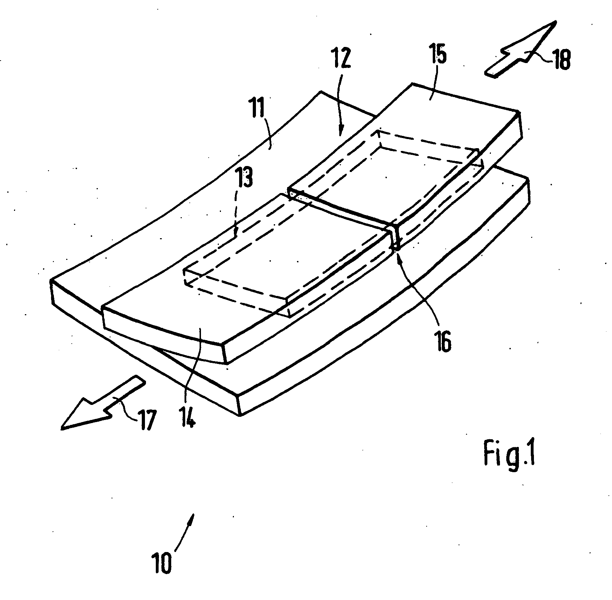

Fig. 1 eine schematisierte Darstellung einer erfindungsgemäßen Luftleitvorrichtung.

Fig. 1 zeigt stark schematisiert einen Ausschnitt aus einem Heckbereich 10 eines Kraftfahrzeugs, wobei vom Heckbereich 10 ein Karosserieteil 11 sowie eine Luftleitvorrichtung 12 gezeigt ist. Die Luftleitvorrichtung 12 ist in einer eingefahrenen Ruhestellung oberflächenbündig in den Heckbereich 10 des Kraftfahrzeugs integriert. In einer ausgefahrenen Betriebstellung hingegen ist die Luftleitvorrichtung 12 aus der Oberflächenkontur des Heckbereichs 10 herausgefahren.

Die erfindungsgemäße Luftleitvorrichtung 12 verfügt über ein mittleres Luftleitelement 13 sowie zwei seitliche Luftleitelemente 14 und 15, wobei in der in Fig. 1 dargestellten Position die seitlichen Luftleitelemente 14 und 15 das mittlere Luftleitelement 13 vollständig abdecken bzw. umhüllen.

So liegen in der in Fig. 1 dargestellten Position die seitlichen Luftleitelemente 14 und 15 mit Endabschnitten unter Ausbildung eines Trennspalts 16 aneinander an. Bei Überführung der seitlichen Luftleitelemente 14 und 15 von der in Fig. 1 dargestellten Ruhestellung in eine ausgefahrene Betriebsstellung sind die seitlichen Luftleitelemente 14 und 15 in Richtung der Pfeile 17 bzw. 18 quer zur Längsrichtung des Fahrzeugs unter Vergrößerung des Abstands zwischen den Endabschnitten und damit unter Vergrößerung des Trennspalts 16 verfahrbar, wobei hierbei das mittlere Luftleitelement 13 zumindest abschnittsweise freigelegt wird.

Die Überführung der erfindungsgemäßen Luftleitvorrichtung 12 von einer Ruhestellung in eine Betriebsstellung erfolgt derart, dass die gesamte Luftleitvorrichtung 12, also das mittlere Luftleitelement 13 zusammen mit den seitlichen Luftleitelementen 14 und 15 aus der Oberflächenkontur des Heckbereichs 10 durch eine nach oben gerichtete Bewegung, vorzugsweise durch eine nach oben gerichtete Schwenkbewegung, herausbewegt wird. Vorzugsweise zeitgleich bzw. simultan mit dieser Verlagerung werden die seitlichen Luftleitelemente 14 und 15 gegenüber dem mittleren Luftleitelement 13 linear bzw. translatorisch in Richtung der Richtungspfeile 17 bzw. 18 und damit quer zur Längsrichtung des Fahrzeugs teleskopartig verschoben, wobei hierdurch die Quererstreckung der erfindungsgemäßen Luftleitvorrichtung 12 vergrößert wird. Dabei wird, wie bereits erwähnt, das mittlere Luftleitelement 13 zumindest abschnittsweise freigelegt.

Wie bereits erwähnt, erfolgt zeitgleich mit der Verlagerung des mittleren Luftleitelements 13 von der Ruhestellung in die Betriebsstellung bzw. umgekehrt von der Betriebsstellung in die Ruhestellung die Verlagerung der seitlichen Luftleitelemente 14 und 15 gegenüber dem mittleren Luftleitelement 13 von einer ebenfalls eingefahrenen Ruhestellung in eine ebenfalls ausgefahrene Betriebsstellung bzw. umgekehrt von der Betriebsstellung in die Ruhestellung. Es sei an dieser Stelle darauf hingewiesen, dass diese beiden Verlagerungen jedoch auch unabhängig bzw. entkoppelt voneinander durchgeführt werden können, wobei dann vorzugsweise zuerst das mittlere Luftleitelement 13 zusammen mit den seitlichen Luftleitelementen 14 und 15 unter Beibehaltung der Relativposition zueinander verlagert wird, und erst anschließend hieran die Verfahrung der seitlichen Luftleitelemente 14 und 15 gegenüber dem mittleren Luftleitelement 13 quer zur Längsrichtung des Fahrzeugs erfolgt.

Die erfindungsgemäße Lufleitvorrichtung 12 verfügt über den Vorteil, dass in der Ruhestellung, in welcher die seitlichen Luftleitelemente 14 und 15 das mittlere Luftleitelement 13 vollständig abdecken oder umhüllen, kein optisch und aerodynamisch negativer Absatz zwischen den seitlichen Luftleitelementen 14 und 15 und dem mittleren Luftleitelement 13 ausgebildet ist.

Zur Verlagerung bzw. Verfahrung der seitlichen Luftleitelemente 14 und 15 relativ zum mittleren Luftleitelement 13 quer zur Längsrichtung des Fahrzeugs ist ein einziger Antrieb ausreichend, der vorzugsweise als spindelförmiger Linearantrieb ausgebildet ist.

Die erfindungsgemäße Luftleitvorrichtung 12 verfügt über den weiteren Vorteil, dass durch die große Überlappung der seitlichen Luftleitelemente 14 und 15 mit dem mittleren Luftleitelement 13, die sowohl in der Ruhestellung als auch in der Betriebsstellung derselben vorliegt, aerodynamische Kräfte sicher auf das mittlere Luftleitelement 13 übertragen werden. Die seitlichen Luftleitelemente 14 und 15 unterliegen dann einer relativ geringen Beanspruchung, so dass dieselben relativ leicht und dünnwandig ausgeführt werden können.

## Patentansprüche

1. Luftleitvorrichtung für ein Fahrzeug, insbesondere für ein Personenkraftfahrzeug, die in einem Heckbereich des Fahrzeugs angeordnet ist und ein mittleres Luftleitelement umfasst, welches von einer eingefahrenen Ruhestellung in eine ausgefahrene Betriebsstellung und umgekehrt verlagerbar ist, wobei seitliche Luftleitelemente zusammen mit dem mittleren Luftleitelement verlagerbar sind, und wobei die seitlichen Luftleitelemente relativ zum mittleren Luftleitelement teleskopartig unter Vergrößerung der Quererstreckung der Luftleitvorrichtung quer zur Längsrichtung des Fahrzeugs von einer ebenfalls eingefahrenen Ruhestellung in eine ebenfalls ausgefahrene Betriebsstellung verfahrbar sind, **dadurch gekennzeichnet, dass** in der Ruhestellung der seitlichen Luftleitelemente (14, 15) dieselben derart über das mittlere Luftleitelement (13) geschoben sind, dass dieselben mit Endabschnitten aneinander liegen und das mittlere Luftleitelement (13) vollständig abdecken oder umhüllen.

2. Luftleitvorrichtung nach Anspruch 1, **dadurch gekennzeichnet, dass** bei Überführung der seitlichen Luftleitelemente (14, 15) von der eingefahrenen Ruhestellung in die ausgefahrene Betriebstellung die seitlichen Luftleitelemente (14, 15) quer zur Längsrichtung des Fahrzeugs unter Vergrößerung des Abstands zwischen den Endabschnitten und unter zumindest abschnittsweiser Freilegung des mittleren Luftleitelements (13) verfahrbar sind.

3. Luftleitvorrichtung nach Anspruch 1 oder 2, **dadurch gekennzeichnet, dass** in der eingefahrenen Ruhestellung die Endabschnitte der seitlichen Luftleitelemente (14, 15) unter Bildung eines Trennungsspalts (16) einander berühren, wobei der Trennungsspalt (16) in der Betriebstellung derselben vergrößert ist.

4. Luftleitvorrichtung nach einem oder mehreren der Ansprüche 1 bis 3, **dadurch gekennzeichnet, dass** die seitlichen Luftleitelemente (14, 15) zeitgleich bzw. simultan mit der Verlagerung des mittleren Luftleitelements (13) von der Ruhestellung in die Betriebsstellung gegenüber dem mittleren Luftleitelement (13) von der ebenfalls eingefahrenen Ruhestellung in die ebenfalls ausgefahrene Betriebsstellung überführbar sind.

## Claims

1. Air guiding device for a vehicle, in particular for a passenger motor vehicle, which air guiding device is arranged in a rear region of the vehicle and comprises a central air guiding element which can be moved from a retracted rest position into a deployed operating position and *vice versa,* with it being possible for lateral air guiding elements to be moved together with the central air guiding element, and with it being possible for the lateral air guiding elements to be moved relative to the central air guiding element in a telescopic fashion from a likewise retracted rest position into a likewise deployed operating position so as to enlarge the lateral extent of the air guiding device transversely with respect to the longitudinal direction of the vehicle, **characterized in that**, in the rest position of the lateral air guiding elements (14, 15), the latter are pushed over the central air guiding element (13) such that they bear with end sections against one another and completely cover or enclose the central air guiding element (13).

2. Air guiding device according to Claim 1, **characterized in that**, as the lateral air guiding elements (14, 15) are moved from the retracted rest position into the deployed operating position, the lateral air guiding elements (14, 15) can be moved transversely with respect to the longitudinal direction of the vehicle so as to enlarge the spacing between the end sections and so as to expose the central air guiding element (13) at least in sections.

3. Air guiding device according to Claim 1 or 2, **characterized in that**, in the retracted rest position, the end sections of the lateral air guiding elements (14, 15) are in contact with one another so as to form a parting gap (16), with the parting gap (16) being enlarged in the operating position of said lateral air guiding elements (14, 15).

4. Air guiding device according to one or more of Claims 1 to 3, **characterized in that** the lateral air guiding elements (14, 15) can be moved relative to the central air guiding element (13) from the likewise retracted rest position into the likewise deployed operating position at the same time as or simultaneously with the movement of the central air guiding element (13) from the rest position into the operating position.

## Revendications

1. Dispositif de guidage d'air pour un véhicule, en particulier pour un véhicule de tourisme, qui est disposé dans une région arrière du véhicule et qui comprend un élément de guidage d'air central, qui peut être déplacé d'une position de repos rentrée dans une position fonctionnelle sortie et inversement, des éléments de guidage d'air latéraux pouvant être déplacés conjointement avec l'élément de guidage d'air central, et les éléments de guidage d'air latéraux pouvant être déplacés par rapport à l'élément de guidage d'air central de manière télescopique en augmentant l'étendue transversale du dispositif de guidage d'air transversalement à la direction longitudinale du véhicule depuis une position de repos également rentrée dans une position fonctionnelle également sortie, **caractérisé en ce que** dans la position de repos des éléments de guidage d'air latéraux (14, 15), ceux-ci sont poussés par le biais de l'élément de guidage d'air central (13) de telle sorte qu'ils se trouvent l'un contre l'autre avec des portions d'extrémité, et qu'ils recouvrent ou enveloppent complètement l'élément de guidage d'air central (13).

2. Dispositif de guidage d'air selon la revendication 1, **caractérisé en ce que** lors du transfert des éléments de guidage d'air latéraux (14, 15) de la position de repos rentrée dans la position fonctionnelle sortie, les éléments de guidage d'air latéraux (14, 15) peuvent être déplacés transversalement à la direction longitudinale du véhicule en augmentant la distance entre les portions d'extrémité et en libérant au moins en partie l'élément de guidage d'air central (13).

3. Dispositif de guidage d'air selon la revendication 1 ou 2, **caractérisé en ce que** dans la position de repos rentrée, les portions d'extrémité des éléments de guidage d'air latéraux (14, 15) sont en contact les unes avec les autres en formant une fente de séparation (16), la fente de séparation (16) étant agrandie dans la position fonctionnelle de ceux-ci.

4. Dispositif de guidage d'air selon l'une quelconque ou plusieurs des revendications 1 à 3, **caractérisé en ce que** les éléments de guidage d'air latéraux (14, 15) peuvent être transférés en même temps ou simultanément au déplacement de l'élément de guidage d'air central (13) de la position de repos dans la position fonctionnelle par rapport à l'élément de guidage d'air central (13) de la position de repos également rentrée dans la position fonctionnelle également sortie.
